# EUROPEAN PATENT APPLICATION

(11) **EP 4 606 282 A1**
(43) Date of publication of application: **27.08.2025**
(21) Application number: 24174670.0
(22) Date of filing: 07.05.2024
(51) Int. Cl.: A47J 37/04, A47J 37/06

(54) **BARBECUE FIXTURE AND PIZZA OVEN**

(30) Priority: 20.02.2024 CN 202420316132 U
(71) Applicant: Haohong Electric Technology (Hubei) Co., Ltd., Huanggang, Hubei 438000 (CN)
(72) Inventor: WANG, Min, Huanggang, 438000 (CN)
(74) Representative: Monteiro Alves, Inês

(57) **Abstract**

Disclosed is a barbecue fixture and a pizza oven (100). The barbecue fixture is applied to a pizza oven (100). The pizza oven (100) is provided with an oven cavity (41). The barbecue fixture includes a fixing frame (32) and a support base (33), the fixing frame is installed on the support base (33), the support base (33) is configured to support the fixing frame (32), the support base (33) is located on the baking table (101), and the fixing frame (32) is at least partially located in the oven cavity (41).

## Description

### TECHNICAL FIELD

The present application relates to the technical field of pizza ovens, and in particular to a barbecue fixture and a pizza oven.

### BACKGROUND

In daily life, barbecuing has gradually become a popular way of leisure and entertainment for group gatherings.

However, existing barbecue fixtures are mostly applied on barbecue grills, involving the installation of rotatable skewers on the barbecue grills, and thus the use of barbecue fixtures is limited to the barbecue grill, which is highly restrictive.

### SUMMARY

The main objective of the present application is to provide a barbecue fixture, aiming to solve the problem that most of the existing barbecue fixtures are mostly applied on the barbecue grills, and the usage scenarios of the barbecue fixture are very limited.

In order to achieve the above objective, the barbecue fixture provided in the present application is applied to a pizza oven. The pizza oven is provided with an oven cavity, and the barbecue fixture is provided in the pizza oven. The barbecue fixture includes: a fixing frame, and a support base.

The fixing frame is at least partially located in the oven cavity and installed on the support base.

The support base is configured to support the fixing frame.

In an embodiment, the support base includes a fixing plate and a stand, the stand is installed on the fixing plate, and the fixing frame is at least partially located in the oven cavity.

In an embodiment, the stand is provided with a perforation, and the fixing frame is configured to penetrate the perforation and is limitedly installed on the stand.

In an embodiment, the stand includes a support frame and an auxiliary frame, the support frame is installed on the fixing plate, the support frame is provided with a perforation, the auxiliary frame is connected to the support frame and protrudingly provided relative to the support frame, the fixing frame is limitedly installed on the support frame and abutted against the auxiliary frame, and the auxiliary frame is configured to support the fixing frame.

In an embodiment, the auxiliary frame is provided with a detent notch, and the fixing frame is abutted against the auxiliary frame at the detent notch.

In an embodiment, the fixing plate is protrudingly provided with a connection plate, and the connection plate is configured to extend towards a direction of the stand to be connected to the stand.

In an embodiment, a positioning plate is provided on a side of the support frame away from the connection plate, and the positioning plate is bent in a direction away from the connection plate.

In an embodiment, the barbecue fixture further includes a drive mechanism, the drive mechanism is connected to the fixing frame and configured to drive the fixing frame to rotate.

In an embodiment, the drive mechanism includes a drive apparatus and a mount, the mount is provided on a side of the stand away from the fixing frame, and the drive apparatus is installed on the mount; the fixing frame is limitedly installed on the mount and connected to the drive apparatus.

The present application further provides a pizza oven, which includes a baking table, a housing, and a barbecue fixture. The housing is configured to cover the baking table and is enclosed with the baking table to form an oven cavity. The fixing frame of the barbecue fixture is at least partially located in the oven cavity.

The technical solution of the present application is to provide a support base on the barbecue fixture, the fixing frame is installed on the support base, and the support base is configured to support the fixing frame; the barbecue fixture of the present application is provided with the fixing frame, which facilitates placing or fixing ingredients on the fixing frame, and the barbecue fixture can be installed on the pizza oven through the support base, so that the fixing frame of the barbecue fixture is at least partially located in the oven cavity, thereby allowing the barbecue fixture to be applied to the pizza oven and expanding the usage scenarios of the barbecue fixture.

### BRIEF DESCRIPTION OF THE DRAWINGS

In order to more clearly illustrate the technical solutions in the embodiments of the present application or in the related art, drawings used in the embodiments or in the related art will be briefly described below. Obviously, the drawings in the following description are only some embodiments of the present application. It will be apparent to those skilled in the art that other figures can be obtained according to the structures shown in the drawings without creative work.
FIG. 1 is a schematic structural diagram of a barbecue fixture according to an embodiment of the present application.
FIG. 2 is a schematic exploded diagram of the barbecue fixture according to an embodiment of the present application.
FIG. 3 is a schematic structural diagram of a pizza oven according to an embodiment of the present application.
FIG. 4 is a schematic exploded diagram of the pizza oven according to an embodiment of the present application.
FIG. 5 is a schematic structural diagram of the barbecue fixture according to another embodiment of the present application.

### Explanation of reference signs:

| Reference sign | Name | Reference sign | Name |
|---|---|---|---|
| 100 | pizza oven | 32 | fixing frame |
| 101 | baking table | 321 | shaft |
| 10 | heating mechanism | 322 | grilling fork |
| 20 | oil pan | 33 | support base |
| 40 | housing | 330 | fixing plate |
| 400 | opening | 331 | connection plate |
| 41 | oven cavity | 332 | stand |
| 50 | exhaust pipe | 333 | support frame |
| 30 | barbecue fixture | 334 | perforation |
| 31 | drive mechanism | 335 | positioning plate |
| 310 | drive apparatus | 336 | auxiliary frame |
| 311 | mount | 337 | detent notch |

The present application will be further described with reference to the embodiments and the accompanying drawings.

### DETAILED DESCRIPTION OF THE EMBODIMENTS

The technical solutions in the embodiments of the present application will be clearly and completely described below with reference to the drawings in the embodiment of the present application. Obviously, the described embodiments are only a part of the embodiments of the present application, not all of the embodiments. Based on the embodiments in the present application, all other embodiments perceived by those skilled in the art without creative effort should be fallen within the protection scope of the present application.

It should be noted that all of the directional instructions in the embodiments of the present application (such as, up, down, left, right, front, rear....) are only used to explain the relative position relationship and movement of each component under a specific attitude (as shown in the drawings), if the specific attitude changes, the directional instructions will change correspondingly.

In the present application, unless otherwise clearly stated and limited, the terms "connection", "fixing", etc. should be understood in a broad sense. For example, "fixing" can be a fixed connection, a detachable connection, or an integral body; it can be a mechanical connection or an electrical connection; it can be a direct connection or an indirect connection through an intermediate medium; it can be an internal connection between two elements or an interactive relationship between two elements, unless otherwise clearly limited. For those of ordinary skill in the art, the specific meanings of the above terms in the present application can be understood according to specific circumstances.

Besides, the descriptions in the present application that refer to "first," "second," etc. are only for descriptive purposes and are not to be interpreted as indicating or implying relative importance or to implicitly indicate the number of technical features indicated. Thus, a feature defined as "first" or "second" may explicitly or implicitly include at least one of the features. In addition, the meaning of "and/or" appearing in the entire text is to include three parallel solutions. For example, "A and/or B" includes only A, or only B, or both A and B. In addition, technical solutions between the embodiments can be combined with each other, but must be based on the realization of the technical solutions by those skilled in the art, and when the technical solutions are contradictory to each other or cannot be realized, the technical solutions should be considered that the combination does not exist, and the technical solutions are not fallen within the protection scope claimed in the present application.

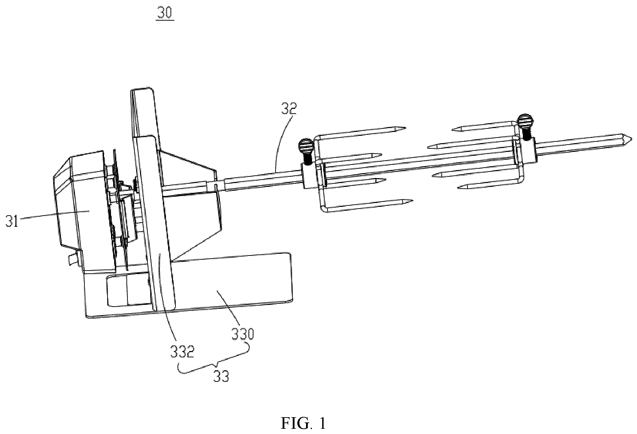

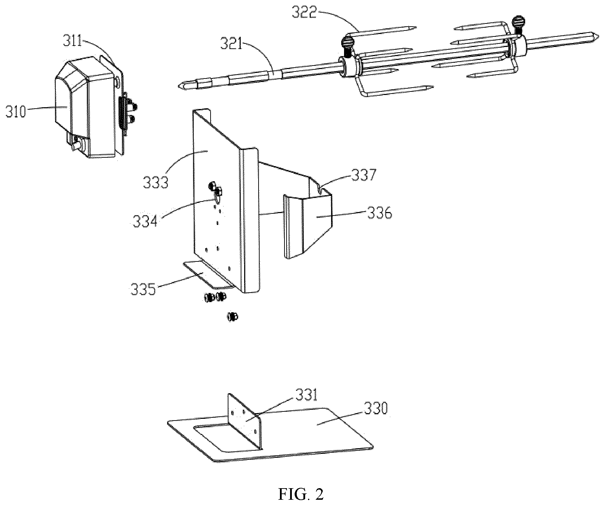

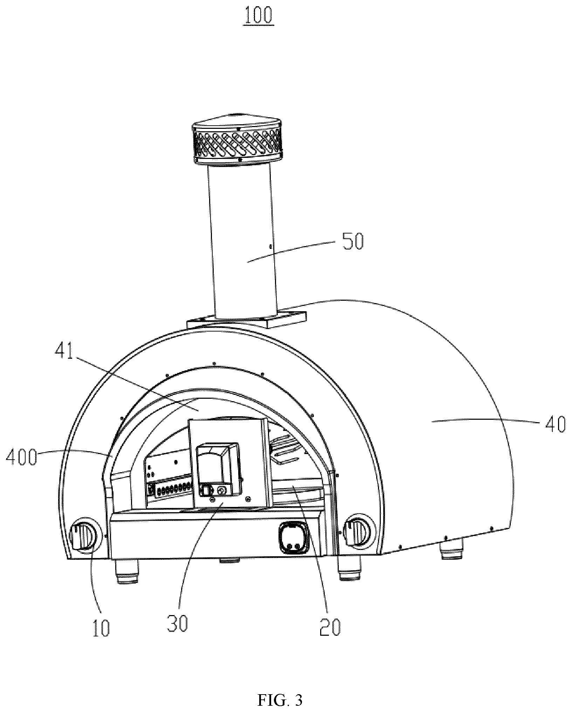

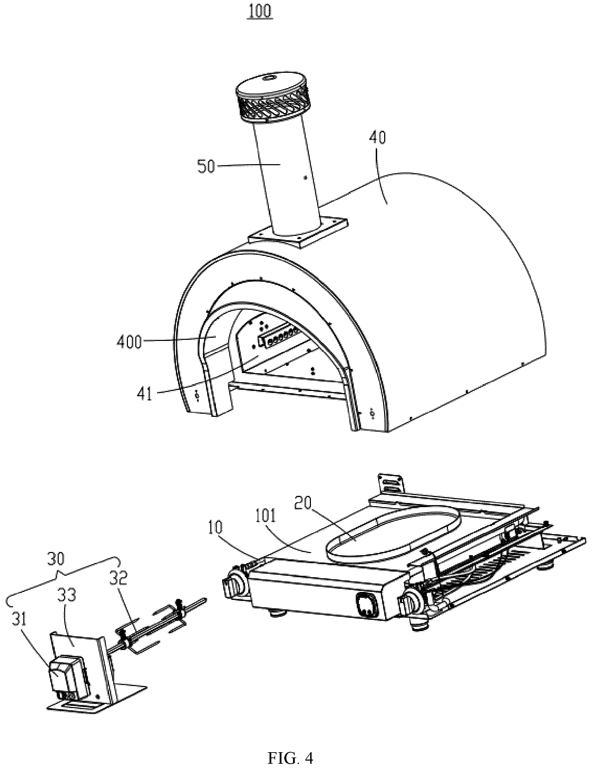

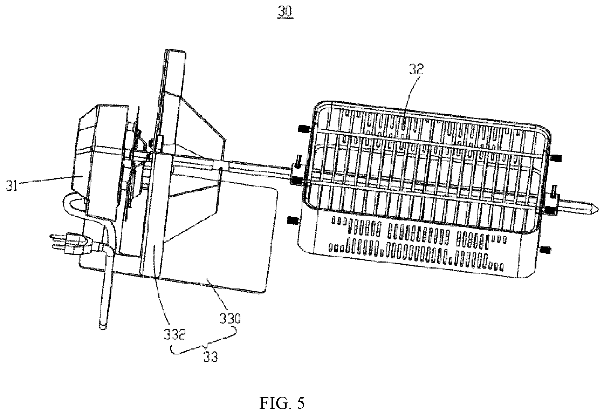

The present application provides a barbecue fixture 30. As shown in FIGS. 1 to 5, FIG. 1 is a schematic structural diagram of the barbecue fixture 30 according to an embodiment of the present application; FIG. 2 is a schematic exploded diagram of the barbecue fixture 30 according to an embodiment of the present application; FIG. 3 is a schematic structural diagram of a pizza oven 100 according to an embodiment of the present application; FIG. 4 is a schematic exploded diagram of the pizza oven 100 according to an embodiment of the present application; FIG. 5 is a schematic structural diagram of the barbecue fixture 100 according to another embodiment of the present application.

In the embodiment of the present application, as shown in FIGS. 1 to 5, the barbecue fixture 30 is applied to the pizza oven 100. The pizza oven 100 is provided with an oven cavity 41, and the barbecue fixture 30 is provided in the pizza oven 100. The barbecue fixture 30 includes: a fixing frame 32, and a support base 33.

The fixing frame 32 is at least partially located in the oven cavity 41.

The fixing frame 32 is installed on the support base 33, and the support base 33 is configured to support the fixing frame 32.

In an embodiment, as shown in FIGS. 1 and 2, the fixing frame 32 may be a grill fork configured to fix food. The fixing frame 32 may also be a fixing clip structure for holding food. The fixing frame 32 is configured to restrict the food in the oven cavity 42 so that the food on the fixing frame 32 can be cooked by the high temperature of the oven cavity 41.

In another embodiment, as shown in FIG. 5, the fixing frame 32 may be a baking basket to place food into the baking basket.

The fixing frame 32 is at least partially located in the oven cavity 41 so that food can be placed in the oven cavity 41, and the food can be cooked using the high temperature in the oven cavity 41.

The technical solution of the present application is to provide a support base 33 on the barbecue fixture 30, the fixing frame 32 is installed on the support base 33, and the support base 33 is configured to support the fixing frame 32; the barbecue fixture 30 of the present application is provided with the fixing frame 32, which facilitates placing or fixing ingredients on the fixing frame 32, and the barbecue fixture 30 can be installed to the pizza oven 100 through the support base 33, so that the fixing frame 32 of the barbecue fixture 30 is at least partially located in the oven cavity 41, thereby allowing the barbecue fixture 30 to be applied to the pizza oven 100 and expanding the usage scenarios of the barbecue fixture 100

In an embodiment, the fixing frame 32 includes a shaft 321 and two grilling forks 322 installed on the shaft 321. The two grilling forks 322 are provided oppositely. The shaft 321 and the drive mechanism 31 are limitedly installed on the support base 33. The pizza oven 100 can adopt an existing kiln-type pizza oven 100 to heat the barbecue fixture 30 in the oven cavity 41 of the pizza oven 100. The two grilling forks 322 can be inserted into various foods. A heating mechanism 10 is installed at the bottom or side of the pizza oven 100. The heating mechanism 10 heats up the oven cavity 41 of the pizza oven 100 and can bake various foods on the two grill forks 322.

It should be noted that the heating manner of the pizza oven 100 and the structure of the heating mechanism 10 of the pizza oven 100 can be adopted in the existing ones, and will not be described again here.

In order to limit the fixing frame 32 in the oven cavity 41, the support base 33 includes a fixing plate 330 and a stand 332. The stand 332 is installed on the fixing plate 330. The fixing frame 32 is at least partially located in the oven cavity 41.

The support base 33 can be an integrally formed structure or a split structure. The support base 33 adopts an integrated structure and is easy to install.

In an embodiment, the support base 33 adopts a split structure so that the support base 33 can be disassembled, packaged and transported. Specifically, the support base 33 includes a fixing plate 330 and a stand 332. The stand 332 is detachably installed on the fixing plate 330. The stand 332 can be installed on the fixing plate 330 through screws.

In order to install the fixing frame 32 to the stand 332, the stand 332 is provided with a perforation 334, and the fixing frame 32 passes through the perforation 334 and is limitedly installed on the stand 332.

In an embodiment, the fixing plate 330 of the support base 33 can be placed inside the oven cavity 41 or outside the oven cavity 41. The fixing frame 32 of the barbecue fixture 30 is limited in the oven cavity 41 of the pizza oven 100. The support base 33 can install the pizza oven 100 without fasteners, and the installation operation is simple and convenient.

In order to support the fixing frame 32, the stand 332 includes a support frame 333 and an auxiliary frame 336. The support frame 333 is installed on the fixing plate 330 and is provided with the perforation 334. The auxiliary frame 336 is connected to the support frame 333 and protrudingly provided relative to the support frame 333. The fixing frame 32 is limitedly installed on the support frame 333 and is abutted against the auxiliary frame 336. The auxiliary frame 336 is configured to support the fixing frame 32.

In an embodiment, the support frame 333 is connected to the fixing plate 330 and is configured to support the fixing frame 32.

Since the shaft 321 of the barbecue fixture 30 is relatively long, and the two grill forks 322 and the food on the grill forks 322 are relatively heavy, the stand 332 is provided with an auxiliary frame 336, and the auxiliary frame 336 is protrudingly provided in a direction towards the two grill forks 322 to assist in supporting the shaft 321 of the barbecue fixture 30 and thereby supporting the two grill forks 322.

The auxiliary frame 336 is provided with a detent notch 337, and the fixing frame 32 is abutted against the auxiliary frame 336 at the detent notch 337. In an embodiment, part of the structure of the shaft 321 is limited to the detent notch 337, and one end of the shaft 321 passes through the perforation 334 of the supporting frame 333 and is connected to the drive apparatus 310.

In order to facilitate the connection between the fixing plate 330 and the stand 332, the fixing plate 330 is protrudingly provided with a connection plate 331. The connection plate 331 extends toward the direction of the stand 332 to be connected to the stand 332.

In an embodiment, the connection plate 331 is connected to the supporting frame 333 through screws.

A positioning plate 335 is provided on a side of the support frame 333 away from the connection plate 331. The positioning plate 335 is bent in a direction away from the connection plate 331.

One side of the support frame 333 is connected to the connection plate 331 through screws, and the other side of the support frame 333 is abutted against the fixing plate 330 through the positioning plate 335. Since the drive mechanism 31 is installed on the side of the support frame 333 away from the two grilling forks 322, the support frame 333 bears a relatively heavy load. The positioning plate 335 is abutted against the fixing plate 330, and the positioning plate 335 can be configured to limit the bending of the support frame 333 to indirectly support the support frame 333.

The barbecue fixture 30 further includes a drive mechanism 31, and the drive mechanism 31 is connected to the fixing frame 32.

The drive mechanism 31 is configured to drive the fixing frame 32 to rotate. The driving mode of the drive mechanism 31 may be an electric driving mode or a manual driving mode.

In order to install the drive mechanism 31 to the support frame 333, the drive mechanism 31 includes a drive apparatus 310 and a mount 311. The mount 311 is provided on a side of the stand 332 away from the fixing frame 32. The drive apparatus 310 is installed on the mount 311, and the fixing frame 32 is limitedly installed on the mount 311 and connected to the drive apparatus 310.

In an embodiment, the drive apparatus 310 is a motor. In another embodiment, the drive apparatus 310 may be a wheel, so that the fixing frame 32 is driven to rotate by manually turning the wheel.

The mount 311 is configured to connect the supporting frame 333 and the drive apparatus 310, so that the drive apparatus 310 is installed on the supporting frame 333 through the mount 311.

The mount 311 is provided with a perforation for the fixing frame 32 to pass through, so that the shaft 321 of the fixing frame 32 passes through the perforation and is connected to the drive apparatus 310.

In an embodiment, the drive apparatus 310 is a motor. The motor is installed on the mount 311 and connected with the shaft 321 of the fixing frame 32 to drive the fixing frame 32 to rotate. The motor drives the fixing frame 32 to rotate, thereby driving the two grilling forks 322 on the shaft 321 to rotate.

The barbecue fixture 30 further includes an oil pan 20, and the oil pan 20 is located below the fixing frame 32. The oil pan 20 can receive oil dripping from the barbecue fixture 30.

The oil pan 20 is located in the pizza oven 100. After baking food in the pizza oven 100, the oil pan 20 can be directly taken out and cleaned to effectively alleviate the phenomenon that the oil dripping from the barbecue fixture 30 is dropped on the baking table 101, and the baking table 101 is contaminated by oil, which requires repeated scrubbing of the heating mechanism 10 with a rag and detergent.

The present application further provides a pizza oven 100, as shown in FIGS. 3 and 4, including the baking table 101 and the barbecue fixture 30. The specific structure of the barbecue fixture 30 refers to the above embodiment. Since the pizza oven 100 adopts all the technical solutions of all the above embodiments, and therefore has at least all the beneficial effects brought by the technical solutions of the above embodiments, which will not be described again here.

The heating mechanism 10 is installed on the bottom or side of the baking table 101. The pizza oven 100 further includes a housing 40. The housing 40 is configured to cover the baking table 101 and is enclosed with the baking table 101 to form an oven cavity 41, and the barbecue fixture 30 is at least partially located in the oven cavity 41.

It should be noted that the heating mechanism 10 may be a combustion tube provided at the bottom or side of the baking table 101. The heating mechanism 10 may adopt the structure of a heating mechanism used for heating in an existing pizza oven.

Furthermore, the pizza oven 100 is further provided with an exhaust pipe 50. The exhaust pipe 50 is provided on the housing 40 and is communicated with the oven cavity 41.

When the heating mechanism 10 of the pizza oven 100 heats up, the temperature in the oven cavity 41 of the pizza oven 100 rises, so that the food on the barbecue fixture 30 can be cooked at high temperature.

In an embodiment, the housing 40 is provided with an opening 400, the opening 400 is connected to the oven cavity 41, and the barbecue fixture 30 is externally exposed in the opening 400.

In an embodiment, the fixing frame 32 of the barbecue fixture 30 is put into the oven cavity 41 from the opening 400, the fixing plate 330 of the barbecue fixture 30 is placed on the baking table 101, and the barbecue fixture 30 is placed in the oven cavity 41.

The shape of the opening 400 may be semicircular. The diameter of the opening 400 is larger than the height and width of the barbecue fixture 30 so that the barbecue fixture 30 can be placed into the oven cavity 41 from the opening 400.

The above are only some embodiments of the present application, and do not limit the scope of the present application thereto. Under the inventive concept of the present application, equivalent structural transformations made according to the description and drawings of the present application, or direct/indirect application in other related technical fields are included in the scope of the present application.

## Claims

1. A barbecue fixture (30), applied to a pizza oven (100) provided with an oven cavity (41), **characterized in that**, the barbecue fixture (30) is provided in the pizza oven (100), and the barbecue fixture (30) comprises:
a fixing frame (32); and
a support base (33);
wherein the fixing frame (32) is at least partially located in the oven cavity (41) and installed on the support base (33), and the support base (33) is configured to support the fixing frame (32).

2. The barbecue fixture (30) according to claim 1, wherein the support base (33) comprises a fixing plate (330) and a stand (332), the stand (332) is installed on the fixing plate (330), and the fixing frame (32) is at least partially located in the oven cavity (41).

3. The barbecue fixture (30) according to claim 2, wherein the stand (332) is provided with a perforation (334), and the fixing frame (32) is configured to penetrate the perforation (334) and is limitedly installed on the stand (332).

4. The barbecue fixture (30) according to claim 3, wherein the stand (332) comprises a support frame (333) and an auxiliary frame (336);
the support frame (333) is installed on the fixing plate (330);
the support frame (333) is provided with a perforation (334);
the auxiliary frame (336) is connected to the support frame (333) and protrudingly provided relative to the support frame (333);
the fixing frame (32) is limitedly installed on the support frame (333) and abutted against the auxiliary frame (336); and
the auxiliary frame (336) is configured to support the fixing frame (32).

5. The barbecue fixture (30) according to claim 4, wherein the auxiliary frame (336) is provided with a detent notch, and the fixing frame (32) is abutted against the auxiliary frame (336) at the detent notch.

6. The barbecue fixture (30) according to claim 4 or 5, wherein the fixing plate (330) is protrudingly provided with a connection plate (331), and the connection plate (331) is configured to extend towards a direction of the stand (332) to be connected to the stand (332).

7. The barbecue fixture (30) according to claim 6, wherein a positioning plate (335) is provided on a side of the support frame (333) away from the connection plate (331), and the positioning plate (335) is bent in a direction away from the connection plate (331).

8. The barbecue fixture (30) according to any one of claims 2 to 5, wherein the barbecue fixture (30) further comprises a drive mechanism (31), and the drive mechanism (31) is connected to the fixing frame (32) and configured to drive the fixing frame (32) to rotate.

9. The barbecue fixture (30) according to claim 8, wherein the drive mechanism (31) comprises a drive apparatus (310) and a mount (311); the mount (311) is provided on a side of the stand (332) away from the fixing frame (32), and the drive apparatus (310) is installed on the mount (311); and the fixing frame (32) is limitedly installed on the mount (311) and connected to the drive apparatus (310).

10. The barbecue fixture (30) according to any one of claims 1 to 5, wherein the barbecue fixture (30) further comprises an oil pan (20), and the oil pan (20) is installed below the fixing frame (32).

11. A pizza oven (100), **characterized by** comprising:
a baking table (101);
a housing (40); and
the barbecue fixture (30) according to any one of claims 1 to 10;
wherein the housing (40) is configured to cover the baking table (101) and is enclosed with the baking table (101) to form an oven cavity (41), and the fixing frame (32) of the barbecue fixture (30) is at least partially located in the oven cavity (41).
